# EUROPEAN PATENT APPLICATION

(11) **EP 3 457 523 A1**
(43) Date of publication of application: **20.03.2019**
(21) Application number: 18183409.4
(22) Date of filing: 13.07.2018
(51) Int. Cl.: H02J 13/00, G06F 1/26

(54) **MONITORING APPARATUS, MONITORING SYSTEM AND MONITORING METHOD**

(30) Priority: 18.09.2017 US 201762560150 P; 06.03.2018 CN 201810182252
(71) Applicant: Lite-On Technology Corporation, Taiwan (TW)
(72) Inventor: KAO, Jung-Yuan, 11492 Taipei (TW); LI, Hung-Chun, 11492 Taipei (TW); LEE, Johnson, 11492 Taipei (TW); HSU, Chia-Chih, 11492 Taipei (TW); HO, Tsia-Jui, 11492 Taipei (TW)
(74) Representative: 2K Patentanwälte Blasberg Kewitz & Reichel

(57) **Abstract**

A monitoring apparatus, a monitoring system, and a monitoring method are provided. The monitoring system includes the monitoring apparatus and a remote apparatus. The monitoring apparatus includes a power-supply circuit, at least one switching circuit, a power measurement module, and a processing module. The power-supply circuit generates at least one output power. The at least one switching circuit transmits the at least one output power to at least one electronic apparatus. The power measurement module measures the output power to obtain power utilizing information of the electronic apparatus. The processing module determines an operating status of the electronic apparatus by comparing the power utilizing information with reference information. Alternatively, the processing module transmits the power utilizing information to the remote apparatus, and the remote apparatus determines the operating status of the electronic apparatus by comparing the power utilizing information with the reference information.

## Description

### BACKGROUND OF THE INVENTION

### [Field of the Invention]

The disclosure relates to a monitoring technique, and in particular, to a monitoring apparatus, a monitoring system, and a monitoring method configured to monitor at least one electronic apparatus.

### [Description of Related Art]

As technology evolves and advances, electric apparatuses that can be connected to networks are no longer limited to desktop computers, notebook computers, and smartphones. Instead, it is expected that electric apparatuses of any type can all be connected to networks so that they can be managed and monitored at any time. For example, in the development of a smart city, street lights, traffic signals, and other outdoor electric apparatuses (e.g., outdoor cameras) can all be connected to networks. However, it is likely that the electric apparatuses connected to networks sometimes fail and cannot operate normally. Moreover, it is also likely that where the electric apparatuses are installed is far away from a management agency of the electric apparatuses. Therefore, inspecting and repairing the electric apparatuses not only take much time but also take much labor.

### SUMMARY OF THE INVENTION

A monitoring apparatus, a monitoring system, and a monitoring method configured to monitor electronic apparatuses provided in the embodiments of the invention could determine whether the electronic apparatuses are operating normally by detecting power utilizing information of the electronic apparatuses, and the electronic apparatuses are reset via communication means when the electronic apparatuses are not operating normally, which not only enhances detection and repairs efficiency of the electronic apparatuses, but also reduces labor costs required for maintaining the electronic apparatuses.

A monitoring system according to an embodiment of the invention is configured to monitor at least one electronic apparatus. The monitoring system includes a remote apparatus and a monitoring apparatus. In an embodiment of the invention, the monitoring apparatus includes a power-supply circuit, at least one switching circuit, a power measurement module, and a processing module. The power-supply circuit is configured to receive an input power and generate at least one output power accordingly. The at least one switching circuit is coupled to the power-supply circuit and is configured to transmit the at least one output power to the at least one electronic apparatus. The power measurement module is coupled to the power-supply circuit and the at least one switching circuit and is configured to measure at least one of the input power and the at least one output power to obtain power utilizing information of the at least one electronic apparatus. The processing module is coupled to the at least one switching circuit to control switch of the at least one switching circuit and is coupled to the power measurement module to receive the power utilizing information of the at least one electronic apparatus. The processing module determines an operating status of the at least one electronic apparatus by comparing the power utilizing information with reference information. Alternatively, the processing module transmits the power utilizing information of the at least one electronic apparatus to the remote apparatus, and the remote apparatus determines the operating status of the at least one electronic apparatus by comparing the power utilizing information with the reference information.

In an embodiment of the invention, when a difference between the power utilizing information and the reference information is greater than a threshold value, the processing module determines that the operating status of the at least one electronic apparatus is abnormal and transmits abnormality information to the remote apparatus, and the remote apparatus determines whether to reset the at least one electronic apparatus according to the abnormality information.

In an embodiment of the invention, if the remote apparatus determines to reset the at least one electronic apparatus, the remote apparatus transmits reset information to the processing module, and the processing module disconnects and re-connects the at least one switching circuit according to the reset information to reset the at least one electronic apparatus.

In an embodiment of the invention, when a difference between the power utilizing information and the reference information is greater than a threshold value, the remote apparatus determines whether to reset the at least one electronic apparatus. If the remote apparatus determines to reset the at least one electronic apparatus, the remote apparatus transmits reset information to the processing module, and the processing module disconnects and re-connects the at least one switching circuit according to the reset information to reset the at least one electronic apparatus.

In an embodiment of the invention, the monitoring apparatus further includes a communication module and a timer circuit. The communication module is coupled to the processing module and is configured to function as a communication interface between the processing module and the remote apparatus. The timer circuit is coupled to the processing module, is configured to calculate time to generate a timing value, and generates a reboot signal when the timing value is equal to a first time length, such that the processing module resets the monitoring apparatus and the at least one electronic apparatus in response to the reboot signal.

A monitoring method according to an embodiment of the invention includes the following steps. At least one output power is generated by a power-supply circuit according to an input power. The at least one output power is transmitted to at least one electronic apparatus by at least one switching circuit transmits. At least one of the input power and the at least one output power is measured by a power measurement module to obtain power utilizing information of the at least one electronic apparatus. The power utilizing information is compared with reference information by a processing module to determine an operating status of the at least one electronic apparatus. Alternatively, the power utilizing information of the at least one electronic apparatus is transmitted to a remote apparatus by the processing module, and the power utilizing information is compared with the reference information by the remote apparatus to determine the operating status of the at least one electronic apparatus.

Accordingly, the monitoring apparatus, the monitoring system, and the monitoring method of the embodiments of the invention determine whether the electronic apparatuses are operating normally by detecting the power utilizing information of the electronic apparatuses, and reset the electronic apparatuses through communication when the electronic apparatuses are not operating normally. Moreover, the timer circuit in the monitoring apparatus functions as a failover apparatus for resetting (or rebooting) the monitoring apparatus and the electronic apparatuses when the processing module or the communication module in the monitoring apparatus is abnormal. Therefore, the monitoring apparatus, the monitoring system, and the monitoring method provided in the embodiments of the invention not only enhances detection and repairs efficiency of the electronic apparatuses, but also reduces labor costs required for maintaining the electronic apparatuses.

To provide a further understanding of the aforementioned and other features and advantages of the disclosure, exemplary embodiments, together with the reference drawings, are described in detail below.

### BRIEF DESCRIPTION OF THE DRAWINGS

FIG. 1 is a block schematic diagram illustrating a monitoring system according to an embodiment of the invention.
FIG. 2 is a block schematic diagram illustrating a monitoring apparatus according to an embodiment of the invention.
FIG. 3 is a block schematic diagram illustrating a monitoring apparatus according to another embodiment of the invention.
FIG. 4 is a flowchart illustrating steps of a monitoring method according to an embodiment of the invention.
FIG. 5 is a flowchart illustrating detailed steps of step S440 of FIG. 4 and subsequent steps according to an embodiment of the invention.
FIG. 6 is a flowchart illustrating detailed steps of step S440 of FIG. 4 and subsequent steps according to another embodiment of the invention.
FIG. 7 is a flowchart illustrating detailed steps of step S440 of FIG. 4 and subsequent steps according to yet another embodiment of the invention.

### DESCRIPTION OF THE EMBODIMENTS

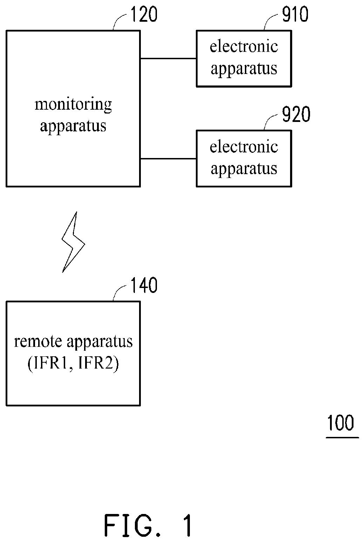

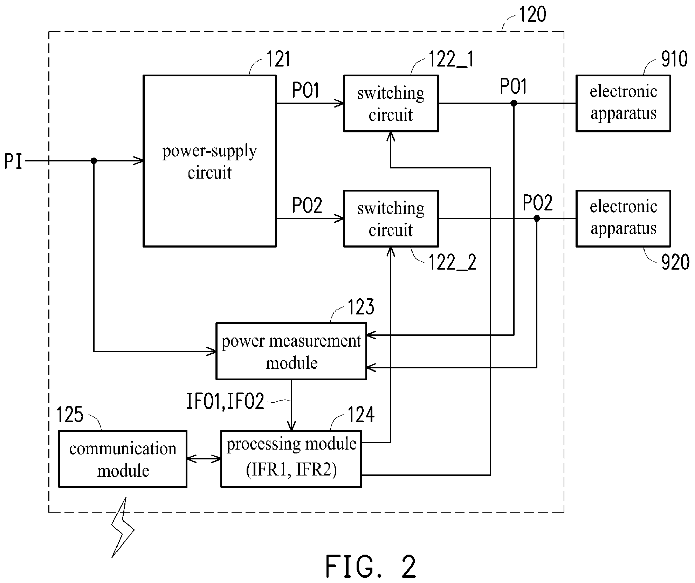

Referring to FIG. 1 and FIG. 2 together, FIG. 1 is a block schematic diagram illustrating a monitoring system according to an embodiment of the invention, and FIG. 2 is a block schematic diagram illustrating a monitoring apparatus according to an embodiment of the invention. A monitoring system 100 is configured to monitor at least one electronic apparatus. However, to avoid redundancy in the description and illustration of drawings, two electronic apparatuses 910, 920 will be described below as an example. Embodiments involving other numbers of electronic apparatuses may be analogously inferred from the description below. As shown in FIG. 1, the monitoring system 100 includes a monitoring apparatus 120 and a remote apparatus 140. The remote apparatus 140 is, for example, a server, but the invention is not limited hereto. The monitoring apparatus 120 includes a power-supply circuit 121, switching circuits 122_1 and 122_2, a power measurement module 123, a processing module 124, and a communication module 125, but the invention is not limited hereto.

The power-supply circuit 121 is configured to receive an input power PI and generate output powers PO1, PO2 accordingly. In an embodiment of the invention, the power-supply circuit 121 is, for example, an AC-to-DC conversion circuit configured to convert the input power PI in the form of an AC type into the output powers PO1 and PO2 in the form of DC type, but the invention is not limited hereto. In other embodiments of the invention, the power-supply circuit 121 may also be a DC-to-DC conversion circuit, depending on the actual application or design requirements.

The switching circuits 122_1 and 122_2 are coupled to the power-supply circuit 121. The switching circuit 122_1 is configured to transmit the output power PO1 to the electronic apparatus 910, and the switching circuit 122_2 is configured to transmit the output power PO2 to the electronic apparatus 920. In an embodiment of the invention, the switching circuits 122_1 and 122_2 are implemented as relays, for example, but the invention is not limited hereto.

The power measurement module 123 is coupled to the power-supply circuit 121 and the switching circuits 122_1 and 122_2. The power measurement module 123 measures a power (or a voltage and a current) of at least one of the input power PI and the output power PO1 to obtain power utilizing information IFO1 of the electronic apparatus 910. Moreover, the power measurement module 123 measures a power (or a voltage and a current) of at least one of the input power PI and the output power PO2 to obtain power utilizing information IFO2 of the electronic apparatus 920. In an embodiment of the invention, the power measurement module 123 is implemented as a meter, for example, but the invention is not limited hereto.

The communication module 125 is coupled to the processing module 124 and functions as a communication interface between the processing module 124 and the remote apparatus 140. In an embodiment of the invention, the communication module 125 may also be integrated in the processing module 124. In an embodiment of the invention, the communication module 125 includes, for example, a wireless communication module or a wired communication module, or includes both of a wireless communication module and a wired communication module. The wireless communication module is, for example, a Bluetooth module, a Bluetooth Low Energy (BLE) module, a Wi-Fi module, a global system for mobile communication (GSM) module, a code division multiple access (CDMA) module, a wideband CDMA (WCDMA) module, a CDMA-2000 module, a time division multiple access (TDMA) module, a worldwide interoperability for microwave access (WiMAX) module, a long term evolution (LTE) module, a wireless local area network (WLAN) module, an ultra wideband (UWB) module, or a combination of the modules above, but the invention is not limited hereto. The wired communication module is, for example, a local area network (LAN) interface module, but the invention is not limited hereto.

The processing module 124 is coupled to the switching circuits 122_1 and 122_2 to respectively control switch of the switching circuits 122_1 and 122_2. Moreover, the processing module 124 is coupled to the power measurement module 123 to receive the power utilizing information IFO1 and IFO2. In an embodiment of the invention, the processing module 124 is hardware, firmware, or software or machine-executable program codes stored in a memory and loaded and executed by a microprocessor or a digital signal processor (DSP), for example. If implemented as hardware, the processing module 124 may be implemented as one single integrated circuit chip or may be implemented as a plurality of circuit chips, but the invention is not limited hereto. The plurality of circuit chips or the one single integrated circuit chip may be implemented as an application specific integrated circuit (ASIC), a programmable logic device (PLD), or a field programmable gate array (FPGA). The memory is, for example, a random access memory, a read-only memory, a flash memory, etc.

In an embodiment of the invention, the remote apparatus 140 collects the power utilizing information IFO1 (IFO2) of the electronic apparatus 910 (920) in a specific time period, and performs a big data analysis on the power utilizing information IFO1 (IFO2) in the specific time period to obtain reference information IFR1 (IFR2) of the electronic apparatus 910 (920), but the invention is not limited hereto. In another embodiment of the invention, the reference information IFR1 (IFR2) of the electronic apparatus 910 (920) may be a reference power value, a reference voltage value, or a reference current value that is pre-set by a user, for example.

In an embodiment of the invention, the processing module 124 determines an operating status of the electronic apparatus 910 by comparing the power utilizing information IFO1 of the electronic apparatus 910 with the reference information IFR1 and determines an operating status of the electronic apparatus 920 by comparing the power utilizing information IFO2 of the electronic apparatus 920 with the reference information IFR2. When a difference between the power utilizing information IFO1 and the reference information IFR1 is greater than a threshold value, the processing module 124 determines that the operating status of the electronic apparatus 910 is abnormal and transmits abnormality information to the remote apparatus 140 via the communication module 125. The remote apparatus 140 then determines whether to reset the electronic apparatus 910 according to the abnormality information. If the remote apparatus 140 determines to reset the electronic apparatus 910, the remote apparatus 140 transmits reset information to the processing module 124, and the processing module 124 then disconnects and re-connects the switching circuit 122_1 according to the reset information to reset the electronic apparatus 910. Similarly, when a difference between the power utilizing information IFO2 and the reference information IFR2 is greater than a threshold value, the processing module 124 determines that the operating status of the electronic apparatus 920 is abnormal and transmits abnormality information to the remote apparatus 140 via the communication module 125. The remote apparatus 140 then determines whether to reset the electronic apparatus 920 according to the abnormality information. If the remote apparatus 140 determines to reset the electronic apparatus 920, the remote apparatus 140 transmits reset information to the processing module 124, and the processing module 124 then disconnects and re-connects the switching circuit 122_2 according to the reset information to reset the electronic apparatus 920.

In another embodiment of the invention, the processing module 124 may also transmit the power utilizing information IFO1 and IFO2 of the electronic apparatuses 910 and 920 to the remote apparatus 140 (via the communication module 125). Then, the remote apparatus 140 determines the operating status of the electronic apparatus 910 by comparing the power utilizing information IFO1 with the reference information IFR1 and determines the operating status of the electronic apparatus 920 by comparing the power utilizing information IFO2 with the reference information IFR2. When the difference between the power utilizing information IFO1 of the electronic apparatus 910 and the reference information IFR1 is greater than a threshold value, the remote apparatus 140 determines whether the electronic apparatus 910 is abnormal and determines whether to reset the electronic apparatus 910. If the remote apparatus 140 determines that the electronic apparatus 910 is indeed abnormal and determines to reset the electronic apparatus 910, the remote apparatus 140 transmits reset information to the processing module 124, and the processing module 124 then disconnects and re-connects the switching circuit 122_1 according to the reset information to reset the electronic apparatus 910. Similarly, when the difference between the power utilizing information IFO2 of the electronic apparatus 920 and the reference information IFR2 is greater than a threshold value, the remote apparatus 140 determines whether the electronic apparatus 920 is abnormal and determines whether to reset the electronic apparatus 920. If the remote apparatus 140 determines that the electronic apparatus 920 is indeed abnormal and determines to reset the electronic apparatus 920, the remote apparatus 140 transmits reset information to the processing module 124, and the processing module 124 then disconnects and re-connects the switching circuit 122_2 according to the reset information to reset the electronic apparatus 920.

In an embodiment of the invention, the processing module 124 includes a storage (not illustrated), and the storage is configured to store the power utilizing information IFO1 and the reference information IFR1 of the electronic apparatus 910 and the power utilizing information IFO2 and the reference information IFR2 of the electronic apparatus 920, but the invention is not limited hereto.

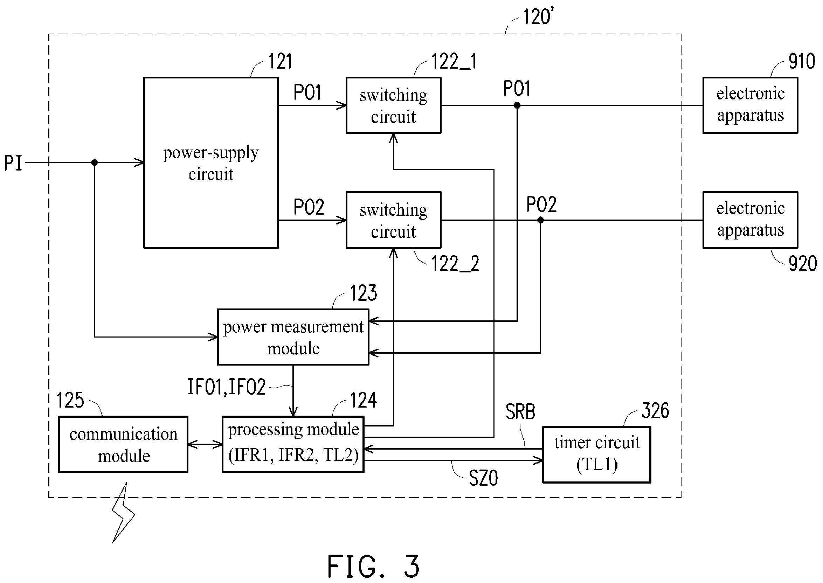

Referring to both FIG. 1 and FIG. 3, FIG. 3 is a block schematic diagram illustrating a monitoring apparatus according to another embodiment of the invention. A monitoring apparatus 120' includes a power-supply circuit 121, switching circuits 122_1 and 122_2, a power measurement module 123, a processing module 124, a communication module 125, and a timer circuit 326, but the invention is not limited hereto. Implementations and operations of the power-supply circuit 121, the switching circuits 122_1 and 122_2, the power measurement module 123, the processing module 124, and the communication module 125 of FIG. 3 are respectively similar to those of the power-supply circuit 121, the switching circuits 122_1 and 122_2, the power measurement module 123, the processing module 124, and the communication module 125 of FIG. 2. Therefore, reference may be made to the relevant descriptions of FIG. 2 above, and the descriptions shall not be repeated here.

The timer circuit 326 is coupled to the processing module 124. The timer circuit 326 functions as a failover apparatus for resetting (or rebooting) the monitoring apparatus 120' and the electronic apparatuses 910, 920 when the processing module 124 or the communication module 125 is abnormal. Specifically, the timer circuit 326 calculates time to generate a timing value. When the timing value is equal to a first time length TL1, the timer circuit 326 generates a reboot signal SRB for the processing module 124, so that the processing module 124 can reset the monitoring apparatus 120' and the electronic apparatuses 910, 920 in response to the reboot signal SRB.

In an embodiment of the invention, the processing module 124 is configured to start the timer circuit 326 at a predetermined time point to have the timer circuit 326 start to calculate time. Moreover, after starting the timer circuit 326, the processing module 124 transmits a timing start signal to the remote apparatus 140 via the communication module 125. The remote apparatus 140 transmits a response signal responding to the timing start signal. If the processing module 124 receives the response signal from the remote apparatus 140 via the communication module 125, it means that the communication module 125 is operating normally. Therefore, the processing module 124 disables the timer circuit 326 to prevent the timer circuit 326 from generating the reboot signal SRB. Conversely, when the communication module 125 is abnormal, the processing module 124 cannot transmit the timing start signal to the remote apparatus 140 via the communication module 125 or cannot receive the response signal associated with the timing start signal from the remote apparatus 140 via the communication module 125. Therefore, the processing module 124 does not disable the timer circuit 326, and the timer circuit 326 will continue to calculate time. Once the timing value of the timer circuit 326 is equal to the first time length TL1, the timer circuit 326 generates the reboot signal SRB for the processing module 124, such that the processing module 124 resets the monitoring apparatus 120' and the electronic apparatuses 910, 920 in response to the reboot signal SRB.

In another embodiment of the invention, in the case where the processing module 124 is operating normally, the processing module 124 may output a return-to-zero signal SZO to the timer circuit 326 at every interval of a second time length TL2 to set the timing value of the timer circuit 326 to zero. Specifically, the second time length TL2 is less than the first time length TL1. Accordingly, when the processing module 124 is abnormal and cannot generate the return-to-zero signal SZO, the timer circuit 326 will continue to calculate time. Once the timing value of the timer circuit 326 is equal to the first time length TL1, the timer circuit 326 generates a reboot signal SRB for the processing module 124 to reset the monitoring apparatus 120' and the electronic apparatuses 910, 920.

In yet another embodiment of the invention, the remote apparatus 140 may transmit return-to-zero information at every interval of the second time length TL2. In the case where the processing module 124 and the communication module 125 are operating normally, the processing module 124 may receive the return-to-zero information via the communication module 125 and generate a return-to-zero signal SZO accordingly for the timer circuit 326 to set the timing value of the timer circuit 326 to zero. Specifically, the second time length TL2 is less than the first time length TL1. Accordingly, when at least one of the communication module 125 and the processing module 124 is abnormal, the processing module 124 cannot receive the return-to-zero information, or the processing module 124 can receive the return-to-zero information but cannot generate the return-to-zero signal SZO. Therefore, the timer circuit 326 will continue to calculate time. Once the timing value of the timer circuit 326 is equal to the first time length TL1, the timer circuit 326 generates a reboot signal SRB for the processing module 124 to reset the monitoring apparatus 120' and the electronic apparatuses 910, 920.

In the foregoing embodiments of the invention, the first time length TL1 may be set through the remote apparatus 140. Specifically, the remote apparatus 140 may transmit setting information to the processing module 124 via the communication module 125, and the processing module 124 may set the first time length TL1 according to the setting information. However, the invention is not limited hereto.

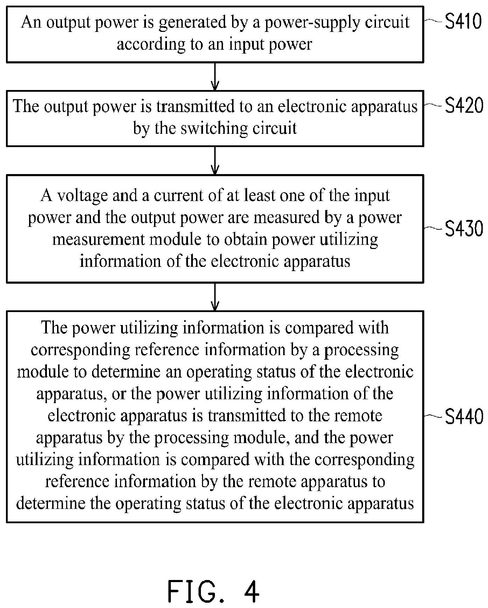

FIG. 4 is a flowchart illustrating steps of a monitoring method according to an embodiment of the invention. As shown in FIG. 4, the monitoring method is applicable to the monitoring system 100 of FIG. 1, the monitoring apparatus 120 of FIG. 2, and the monitoring apparatus 120' of FIG. 3, but the invention is not limited hereto. Referring to FIG. 1, FIG. 3, and FIG. 4, first, in step S410 of FIG. 4, output powers PO1, PO2 are generated by the power-supply circuit 121 according to an input power PI. Next, in step S420, the output power PO1 (PO2) is transmitted to the electronic apparatus 910 (920) by the switching circuit 122_1 (122_2). Afterwards, in step S430, a voltage and a current of at least one of the input power PI and the output power PO1 (PO2) are measured by the power measurement module 123 to obtain power utilizing information IFO1 (IFO2) of the electronic apparatus 910 (920). Then, in step S440, the power utilizing information IFO1 (IFO2) is compared with corresponding reference information IFR1 (IFR2) by the processing module 124 to determine an operating status of the electronic apparatus 910 (920). Alternatively, the power utilizing information IFO1 (IFO2) of the electronic apparatus 910 (920) is transmitted to the remote apparatus 140 by the processing module 124, and the power utilizing information IFO1 (IFO2) is compared with the corresponding reference information IFR1 (IFR2) by the remote apparatus 140 to determine the operating status of the electronic apparatus 910 (920).

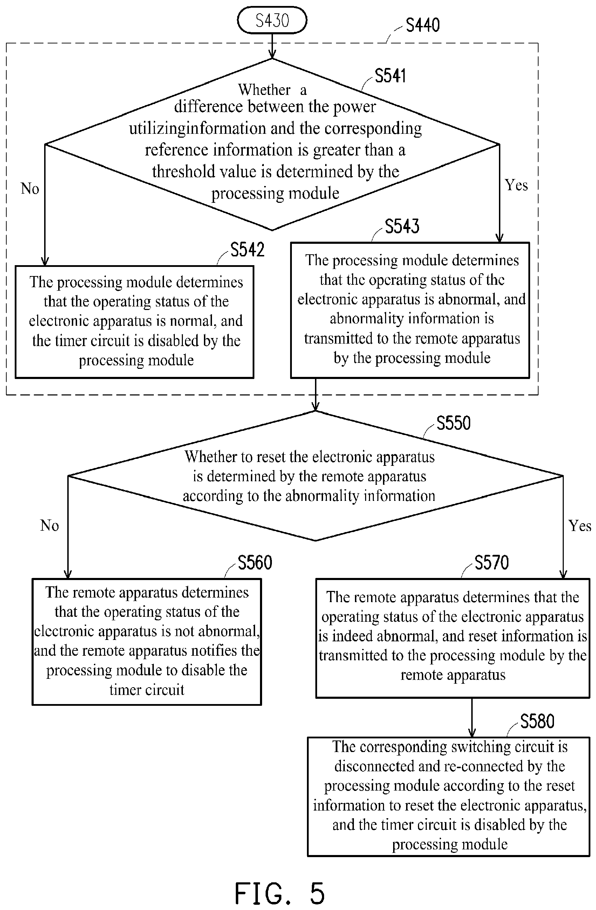

Details of the step of determining, by the processing module 124, the operating status of the electronic apparatus 910 (920) by comparing the power utilizing information IFO1 (IFO2) with the reference information IFR1 (IFR2) in step S440 of FIG. 4 will be described below. Referring to FIG. 1, FIG. 3, FIG. 4, and FIG. 5, FIG. 5 is a flowchart illustrating detailed steps of step S440 and subsequent steps according to an embodiment of the invention. Step S440 includes detailed steps S541, S542 and S543. First, in step S541, whether a difference between the power utilizing information IFO1 (IFO2) and the corresponding reference information IFR1 (IFR2) is greater than a threshold value is determined by the processing module 124. If the determination result in step S541 is negative, the processing module 124 determines that the operating status of the electronic apparatus 910 (920) is normal, and the timer circuit 326 is disabled by the processing module 124 to prevent the timer circuit 326 from generating a reboot signal SRB, as shown in step S542. Conversely, if the determination result in step S541 is affirmative, the processing module 124 determines that the operating status of the electronic apparatus 910 (920) is abnormal, and abnormality information is transmitted to the remote apparatus 140 by the processing module 124, as shown in step S543.

Next, in step S550, whether to reset the electronic apparatus 910 (920) is determined by the remote apparatus 140 according to the abnormality information. If the determination result in step S550 is negative (namely, the remote apparatus 140 determines that the operating status of the electronic apparatus 910 (920) is not abnormal and determines not to reset the electronic apparatus 910 (920)), then the remote apparatus 140 notifies the processing module 124 to disable the timer circuit 326 to prevent the timer circuit 326 from generating the reboot signal SRB, as shown in step S560.

It is noted that when a manager of the remote apparatus 140 increases or decreases the number of the electronic apparatuses 910 (920) coupled to output terminals of the switching circuits 122_1 (122_2), an output current of the output power PO1 (PO2) will be increased or decreased, such that the difference between the power utilizing information IFO1 (IFO2) detected by the power measurement module 123 and the reference information IFR1 (IFR2) is greater than the threshold value. In that case, even though the processing module 124 determines that the operating status of the electronic apparatus 910 (920) is abnormal, the manager of the remote apparatus 140 can still determine that the operating status of the electronic apparatus 910 (920) is actually not abnormal and can then decide not to reset the electronic apparatus 910 (920).

Conversely, if the determination result in step S550 is affirmative (namely, the remote apparatus 140 determines that the operating status of the electronic apparatus 910 (920) is indeed abnormal and determines to reset the electronic apparatus 910 (920)), then reset information is transmitted to the processing module 124 by the remote apparatus 140, as shown in step S570. Then, the corresponding switching circuit 122_1 (122_2) is disconnected and re-connected by the processing module 124 according to the reset information to reset the electronic apparatus 910 (920), and the timer circuit 326 is disabled by the processing module 124 to prevent the timer circuit 326 from generating the reboot signal SRB, as shown in step S580.

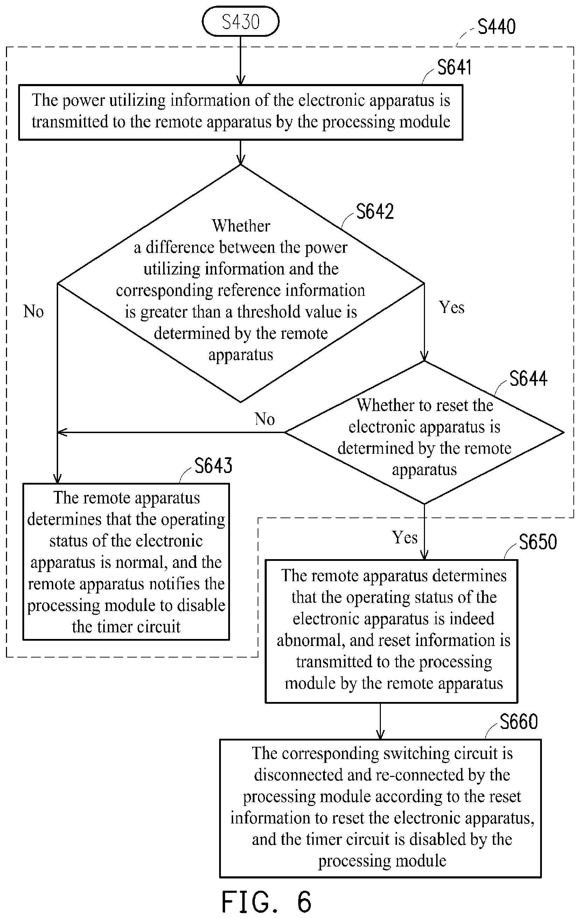

Details of the step of determining, by the remote apparatus 140, the operating status of the electronic apparatus 910 (920) by comparing the power utilizing information IFO1 (IFO2) with the reference information IFR1 (IFR2) in step S440 of FIG. 4 will be described below. Referring to FIG. 1, FIG. 3, FIG. 4, and FIG. 6, FIG. 6 is a flowchart illustrating detailed steps of step S440 and subsequent steps according to another embodiment of the invention. Step S440 includes detailed steps S641, S642, S643, S644. First, in step S641, the power utilizing information IFO1 (IFO2) of the electronic apparatus 910 (920) is transmitted to the remote apparatus 140 by the processing module 124. Next, in step S642, whether a difference between the power utilizing information IFO1 (IFO2) and the corresponding reference information IFR1 (IFR2) is greater than a threshold value is determined by the remote apparatus 140. If the determination result in step S642 is negative, the remote apparatus 140 determines that the operating status of the electronic apparatus 910 (920) is normal, and the remote apparatus 140 notifies the processing module 124 to disable the timer circuit 326 to prevent the timer circuit 326 from generating a reboot signal SRB, as shown in step S643. Conversely, if the determination result in step S642 is affirmative, whether to reset the electronic apparatus 910 (920) is determined by the remote apparatus 140, as shown in step S644.

If the determination result in step S644 is negative (namely, the remote apparatus 140 determines that the operating status of the electronic apparatus 910 (920) is actually not abnormal and determines not to reset the electronic apparatus 910 (920)), proceeding to step S643, the remote apparatus 140 notifies the processing module 124 to disable the timer circuit 326 to prevent the timer circuit 326 from generating the reboot signal SRB.

Conversely, if the determination result in step S644 is affirmative (namely, the remote apparatus 140 determines that the operating status of the electronic apparatus 910 (920) is indeed abnormal and determines to reset the electronic apparatus 910 (920)), then reset information is transmitted to the processing module 124 by the remote apparatus 140, as shown in step S650. Then, the corresponding switching circuit 122_1 (122_2) is disconnected and re-connected by the processing module 124 according to the reset information to reset the electronic apparatus 910 (920), and the timer circuit 326 is disabled by the processing module 124 to prevent the timer circuit 326 from generating the reboot signal SRB, as shown in step S660.

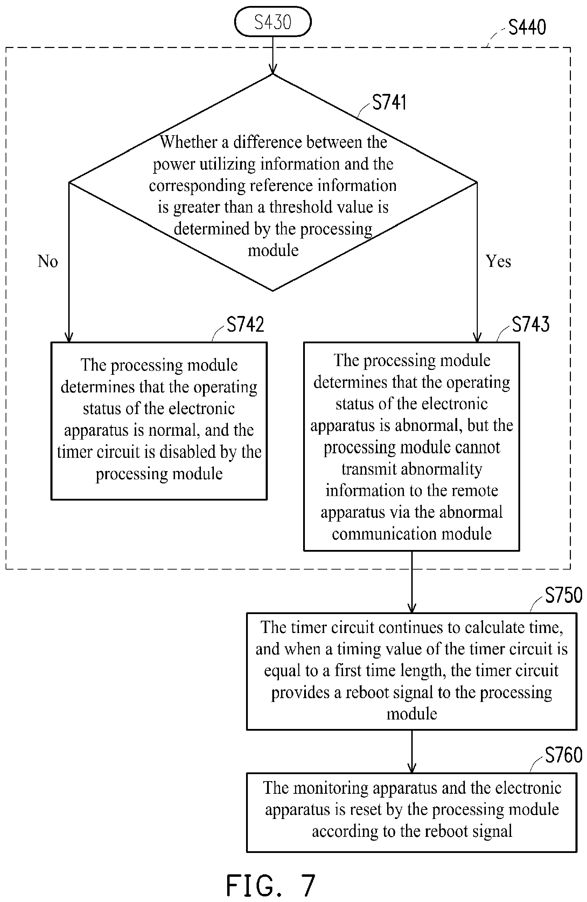

The case where abnormality occurs in the communication module 125 in step S440 of FIG. 4 will be described below. Referring to FIG. 1, FIG. 3, FIG. 4, and FIG. 7, FIG. 7 is a flowchart illustrating detailed steps of step S440 and subsequent steps according to yet another embodiment of the invention. Step S440 includes detailed steps S741, S742, S743. First, in step S741, whether a difference between the power utilizing information IFO1 (IFO2) and the corresponding reference information IFR1 (IFR2) is greater than a threshold value is determined by the processing module 124. If the determination result in step S741 is negative, the processing module 124 determines that the operating status of the electronic apparatus 910 (920) is normal, and the timer circuit 326 is disabled by the processing module 124 to prevent the timer circuit 326 from generating a reboot signal SRB, as shown in step S742. Conversely, if the determination result in step S741 is affirmative, the processing module 124 determines that the operating status of the electronic apparatus 910 (920) is abnormal, but the processing module 124 cannot transmit abnormality information to the remote apparatus 140 via the abnormal communication module 125, as shown in step S743. Specifically, when abnormality occurs in the communication module 125, the abnormality information cannot be transmitted to the remote apparatus 140, so that the processing module 124 cannot receive a response from the remote apparatus 140 to disable the timer circuit 326. Therefore, the timer circuit 326 will continue to calculate time, and when a timing value of the timer circuit 326 is equal to a first time length TL1, the timer circuit 326 provides the reboot signal SRB to the processing module 124, as shown in step S750. Next, in step S760, the monitoring apparatus 120' and the electronic apparatuses 910, 920 is reset by the processing module 124 according to the reboot signal SRB.

In addition, other implementation details of the monitoring method of the embodiments of the invention are sufficiently taught, suggested, and described in the description of the embodiments of FIG. 1 to FIG. 3 and are thus not repeatedly described here.

In summary of the above, the monitoring apparatus, the monitoring system, and the monitoring method provided in the embodiments of the invention determine whether the electronic apparatuses are operating normally by detecting the power utilizing information of the electronic apparatuses and reset the electronic apparatuses through communication when the electronic apparatuses are not operating normally. Moreover, the timer circuit in the monitoring apparatus functions as a failover apparatus for resetting (or rebooting) the monitoring apparatus and the electronic apparatuses when the processing module or the communication module in the monitoring apparatus is abnormal. Therefore, the monitoring apparatus, the monitoring system, and the monitoring method provided in the embodiments of the invention not only enhances detection and repairs efficiency of the electronic apparatuses, but also reduces labor costs required for maintaining the electronic apparatuses.

## Claims

1. A monitoring system (100) configured to monitor at least one electronic apparatus (910, 920), the monitoring system (100) comprising:
a remote apparatus (140); and
a monitoring apparatus (120, 120') comprising:
a power-supply circuit (121) configured to receive an input power (PI) and generate at least one output power (PO1, PO2) accordingly;
at least one switching circuit (122_1, 122_2), coupled to the power-supply circuit (121), configured to transmit the at least one output power (PO1, PO2) to the at least one electronic apparatus (910, 920);
a power measurement module (123), coupled to the power-supply circuit (121) and the at least one switching circuit (122_1, 122_2), configured to measure at least one of the input power (PI) and the at least one output power (PO1, PO2) to obtain power utilizing information (IFO1, IFO2) of the at least one electronic apparatus (910, 920); and
a processing module (124), coupled to the at least one switching circuit (122_1, 122_2) to control switch of the at least one switching circuit (122_1, 122_2), and coupled to the power measurement module (123) to receive the power utilizing information (IFO1, IFO2) of the at least one electronic apparatus (910, 920),
wherein the processing module (124) determines an operating status of the at least one electronic apparatus (910, 920) by comparing the power utilizing information (IFO1, IFO2) with reference information (IFR1, IFR2), or the processing module (124) transmits the power utilizing information (IFO1, IFO2) of the at least one electronic apparatus (910, 920) to the remote apparatus (140) and the remote apparatus (140) determines the operating status of the at least one electronic apparatus (910, 920) by comparing the power utilizing information (IFO1, IFO2) with the reference information (IFR1, IFR2).

2. The monitoring system (100) according to claim 1, wherein when a difference between the power utilizing information (IFO1, IFO2) and the reference information (IFR1, IFR2) is greater than a threshold value, the processing module (124) determines that the operating status of the at least one electronic apparatus (910, 920) is abnormal and transmits abnormality information to the remote apparatus (140), and the remote apparatus (140) determines whether to reset the at least one electronic apparatus (910, 920) according to the abnormality information.

3. The monitoring system (100) according to claim 2, wherein if the remote apparatus (140) determines to reset the at least one electronic apparatus (910, 920), the remote apparatus (140) transmits reset information to the processing module (124), and the processing module (124) disconnects and re-connects the at least one switching circuit (122_1, 122_2) according to the reset information to reset the at least one electronic apparatus (910, 920).

4. The monitoring system (100) according to claim 1, wherein
when a difference between the power utilizing information (IFO1, IFO2) and the reference information (IFR1, IFR2) is greater than a threshold value, the remote apparatus (140) determines whether to reset the at least one electronic apparatus (910, 920), and
if the remote apparatus (140) determines to reset the at least one electronic apparatus (910, 920), the remote apparatus (140) transmits reset information to the processing module (124), and the processing module (124) disconnects and re-connects the at least one switching circuit (122_1, 122_2) according to the reset information to reset the at least one electronic apparatus (910, 920).

5. The monitoring system (100) according to one of claims 1-4, wherein the monitoring apparatus (120') further comprises:
a communication module (125), coupled to the processing module (124), configured to function as a communication interface between the processing module (124) and the remote apparatus (140); and
a timer circuit (326), coupled to the processing module (124), configured to calculate time to generate a timing value, and generate a reboot signal (SRB) when the timing value is equal to a first time length (TL1), such that the processing module (124) resets the monitoring apparatus (120') and the at least one electronic apparatus (910, 920) in response to the reboot signal (SRB),
wherein the remote apparatus (140) transmits setting information to the processing module (124) via the communication module (125), and the processing module (124) sets the first time length (TL1) according to the setting information.

6. The monitoring system (100) according to claim 5, wherein
the processing module (124) starts the timer circuit (326) at a predetermined time point to have the timer circuit (326) start to calculate time, and after starting the timer circuit (326), the processing module (124) further transmits a timing start signal to the remote apparatus (140) via the communication module (125), and
if the processing module (124) receives a response signal associated with the timing start signal from the remote apparatus (140) via the communication module (125), the processing module (124) disables the timer circuit (326).

7. The monitoring system (100) according to one of claims 5-6, wherein
when the processing module (124) is normal, the processing module (124) sets the timing value to zero at every interval of a second time length (TL2), wherein the second time length (TL2) is less than the first time length (TL1).

8. A monitoring apparatus (120, 120') configured to monitor at least one electronic apparatus (910, 920), the monitoring apparatus (120, 120') comprising:
a power-supply circuit (121) configured to receive an input power (PI) and generate at least one output power (PO1, PO2) accordingly;
at least one switching circuit (122_1, 122_2), coupled to the power-supply circuit (121), and configured to transmit the at least one output power (PO1, PO2) to the at least one electronic apparatus (910, 920);
a power measurement module (123), coupled to the power-supply circuit (121) and the at least one switching circuit (122_1, 122_2), configured to measure at least one of the input power (PI) and the at least one output power (PO1, PO2) to obtain power utilizing information (IFO1, IFO2) of the at least one electronic apparatus (910, 920); and
a processing module (124), coupled to the at least one switching circuit (122_1, 122_2) to control switch of the at least one switching circuit (122_1, 122_2), and coupled to the power measurement module (123) to receive the power utilizing information (IFO1, IFO2) of the at least one electronic apparatus (910, 920),
wherein the processing module (124) determines an operating status of the at least one electronic apparatus (910, 920) by comparing the power utilizing information (IFO1, IFO2) with reference information (IFR1, IFR2).

9. The monitoring apparatus (120, 120') according to claim 8, wherein when a difference between the power utilizing information (IFO1, IFO2) and the reference information (IFR1, IFR2) is greater than a threshold value, the processing module (124) determines that the operating status of the at least one electronic apparatus (910, 920) is abnormal and transmits abnormality information to a remote apparatus (140).

10. The monitoring apparatus (120, 120') according to claim 9, wherein if the processing module (124) receives reset information from the remote apparatus(140), the processing module (124) disconnects and re-connects the at least one switching circuit (122_1, 122_2) according to the reset information to reset the at least one electronic apparatus (910, 920).

11. The monitoring apparatus (120') according to one of claims 8-10, further comprising:
a communication module (125), coupled to the processing module (124), configured to function as a communication interface between the processing module (124) and a remote apparatus (140); and
a timer circuit (326), coupled to the processing module (124), configured to calculate time to generate a timing value, and generate a reboot signal (SRB) when the timing value is equal to a first time length (TL1), such that the processing module (124) resets the monitoring apparatus (120') and the at least one electronic apparatus (910, 920) in response to the reboot signal (SRB),
wherein the processing module (124) receives setting information from the remote apparatus (140) via the communication module (125), and the processing module (124) sets the first time length (TL1) according to the setting information.

12. The monitoring apparatus (120') according to claim 11, wherein
the processing module (124) starts the timer circuit (326) at a predetermined time point to have the timer circuit (326) start to calculate time, and after starting the timer circuit (326), the processing module (124) further transmits a timing start signal to the remote apparatus (140) via the communication module (125), and
if the processing module (124) receives a response signal associated with the timing start signal from the remote apparatus (140) via the communication module (125), the processing module (124) disables the timer circuit (326).

13. The monitoring apparatus (120') according to one of claims 11-12, wherein
when the processing module (124) is normal, the processing module (124) sets the timing value to zero at every interval of a second time length (TL2), wherein the second time length (TL2) is less than the first time length (TL1).

14. A monitoring method for monitoring at least one electronic apparatus (910, 920), the monitoring method comprising:
generating, by a power-supply circuit (121), at least one output power (PO1, PO2) according to an input power (PI);
transmitting, by at least one switching circuit (122_1, 122_2), the at least one output power (PO1, PO2) to the at least one electronic apparatus (910, 920);
measuring, by a power measurement module (123), at least one of the input power (PI) and the at least one output power (PO1, PO2) to obtain power utilizing information (IFO1, IFO2) of the at least one electronic apparatus (910, 920); and
determining, by a processing module (124), an operating status of the at least one electronic apparatus (910, 920) by comparing the power utilizing information (IFO1, IFO2) with reference information (IFR1, IFR2), or transmitting, by the processing module (124), the power utilizing information (IFO1, IFO2) of the at least one electronic apparatus (910, 920) to a remote apparatus (140), and determining, by the remote apparatus (140), the operating status of the at least one electronic apparatus (910, 920) by comparing the power utilizing information (IFO1, IFO2) with the reference information (IFR1, IFR2).

15. The monitoring method according to claim 14, further comprising:
determining, by the processing module (124), that the operating status of the at least one electronic apparatus (910, 920) is abnormal and transmitting abnormality information to the remote apparatus (140) when a difference between the power utilizing information (IFO1, IFO2) and the reference information (IFR1, IFR2) is greater than a threshold value;
determining, by the remote apparatus (140), whether to reset the at least one electronic apparatus (910, 920) according to the abnormality information;
transmitting, by the remote apparatus (140), reset information to the processing module (124) if it is determined to reset the at least one electronic apparatus (910, 920); and
disconnecting and re-connecting, by the processing module (124), the at least one switching circuit (122_1, 122_2) according to the reset information to reset the at least one electronic apparatus (910, 920).

16. The monitoring method according to claim 14, further comprising:
determining, by the remote apparatus (140), whether to reset the at least one electronic apparatus (910, 920) when a difference between the power utilizing information (IFO1, IFO2) and the reference information (IFR1, IFR2) is greater than a threshold value;
transmitting, by the remote apparatus (140), reset information to the processing module (124) if it is determined to reset the at least one electronic apparatus (910, 920); and
disconnecting and re-connecting, by the processing module (124), the at least one switching circuit (122_1, 122_2) according to the reset information to reset the at least one electronic apparatus (910, 920).

17. The monitoring method according to one of claims 14-16, further comprising:
transmitting, by the remote apparatus (140), setting information to the processing module (124);
setting, by the processing module (124), a first time length (TL1) of a timer circuit (326) according to the setting information;
calculating time, by the timer circuit (326), to generate a timing value, and providing a reboot signal (SRB) to the processing module (124) when the timing value is equal to the first time length (TL1); and
resetting, by the processing module (124), the monitoring apparatus (120') and the at least one electronic apparatus (910, 920) in response to the reboot signal (SRB).

18. The monitoring method according to claim 17, wherein the step of calculating time, by the timer circuit (326), to generate the timing value comprises:
starting, by the processing module (124), the timer circuit (326) at a predetermined time point to have the timer circuit (326) start to calculate time;
further transmitting, by the processing module (124) and a communication module (125), a timing start signal to the remote apparatus (140) after the timer circuit (326) is started; and
disabling, by the processing module (124), the timer circuit (326) if a response signal associated with the timing start signal is received by the processing module (124) and the communication module (125) from the remote apparatus (140).

19. The monitoring method according to claim 17, wherein the step of calculating time, by the timer circuit (326), to generate the timing value comprises:
setting, by the processing module (124), the timing value to zero at every interval of a second time length (TL2) when the processing module (124) is normal, wherein the second time length (TL2) is less than the first time length (TL1).
